# FASCICULE DE BREVET EUROPEEN

(11) **EP 3 380 438 B1**
(45) Date de publication et mention de la délivrance du brevet: **02.09.2020**
(21) Numéro de dépôt: 16801771.3
(22) Date de dépôt: 25.11.2016
(51) Int. Cl.: C01G 49/00, C01F 17/00, C04B 35/26, C04B 35/626, H01F 1/34, H01F 10/24

(54) **MATERIAU FERRITE DE TYPE GRENAT A TRES FAIBLE AIMANTATION A SATURATION ET COMPOSANT COMPRENANT LEDIT MATERIAU A TRES FAIBLE AIMANTATION A SATURATION**
GRANATARTIGES FERRITMATERIAL MIT SEHR GERINGER SÄTTIGUNGSMAGNETISIERUNG UND KOMPONENTE MIT DIESEM MATERIAL MIT SEHR GERINGER SÄTTIGUNGSMAGNETISIERUNG
GARNET-TYPE FERRITE MATERIAL WITH VERY LOW SATURATION MAGNETIZATION AND COMPONENT COMPRISING SAID MATERIAL WITH VERY LOW SATURATION MAGNETIZATION

(30) Priorité: 27.11.2015 FR 1502479; 15.04.2016 FR 1600635
(43) Date de publication de la demande: 03.10.2018
(73) Titulaire: THALES, 92400 Courbevoie (FR)
(72) Inventeur: LEBOURGEOIS, Richard, 91767 Palaiseau Cedex (FR); QASSYM, Lilia, 91767 Palaiseau Cedex (FR)
(74) Mandataire: Esselin, Sophie
(86) Numéro de dépôt international: PCT/EP2016/078867
(87) Numéro de publication internationale: WO 2017/089575

(56) Documents cités:
- WO-A1-2012/042168
- US-A- 3 886 077
- US-A1- 2009 321 677

## Description

Le domaine de l'invention est celui des matériaux ferrites à faibles pertes, particulièrement adaptés à la réalisation de composants hyperfréquences et notamment de composants passifs magnétiques à faibles pertes fonctionnant à des fréquences de l'ordre de quelques Gigahertz. De tels composants sont particulièrement recherchés actuellement tant pour des applications civiles de télécommunications que pour des applications RADAR fonctionnant typiquement dans des gammes de fréquences comprises entre quelques Gigahertz et quelques dizaines de Gigahertz.

Il peut s'agir de composants passifs magnétiques qui réalisent dans les systèmes de communications hyperfréquences, des fonctions de type filtres, déphaseurs, circulateurs ou isolateurs.

On peut notamment réaliser des composants ferrite multicouche pour des fonctions circulateur et isolateur en hyperfréquences (entre 1 GHz et 30 GHz). Ces composants ferrites sont plus particulièrement destinés à être intégrés dans des modules actifs hyperfréquences qui composent les antennes à balayage électronique.

Pour ce faire, il est intéressant de réaliser des composants multicouches à partir de ferrites magnétiques de type grenat capables de présenter les deux avantages importants suivants :
- de faibles pertes magnétiques et diélectriques en hyperfréquence ;
- pouvoir être frittés à basse température, aux environs de 900°C soit 600°C en-dessous de la température de frittage des ferrites de type grenat conventionnels, ce qui permet de les cofritter avec des diélectriques et des métaux comme l'or ou l'argent.

Les pistes métalliques sont réalisées à partir d'argent ou d'or déposé par sérigraphie.

La technologie de cofrittage est déjà utilisée pour la fabrication de microinductance comprenant un matériau ferrite, un bobinage et une terminaison ou un condensateur céramique multicouches. Mais cette technologie se limite actuellement à l'association de deux matériaux, un oxyde (ferrite ou diélectrique) et un métal.

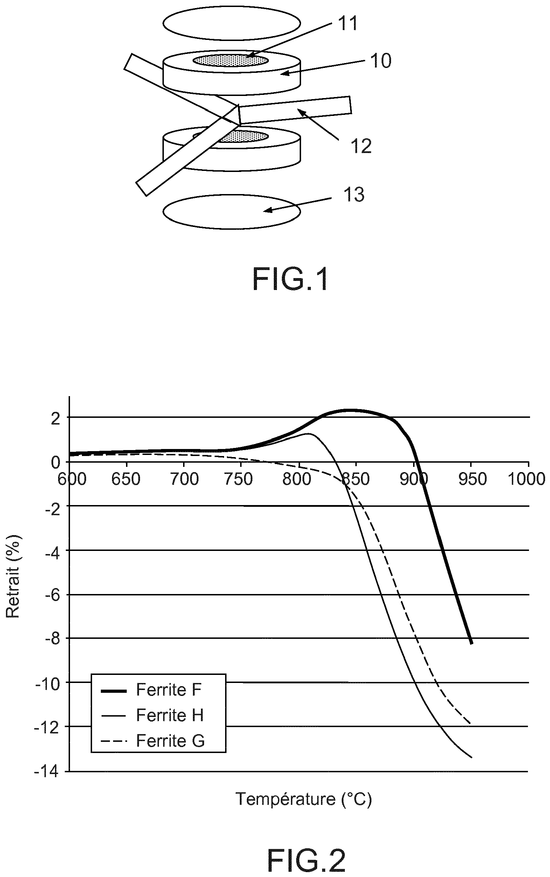

La réalisation de composants magnétiques plus élaborés mettant en œuvre un ferrite, un diélectrique et un métal nécessite de pouvoir disposer de matériaux compatibles de la technologie de cofrittage multicouche. La figure 1 schématise une vue éclatée d'un circulateur ferrite-diélectrique sans son aimant, avec un diélectrique 10, un ferrite 11, une jonction Y métallique 12 et un plan de masse 13.

La structure le plus souvent utilisée pour ces composants est de type composite : le ferrite ayant la forme d'un disque est entouré d'un matériau non magnétique, un diélectrique présentant de faibles pertes. Une solution simple serait d'utiliser des diélectriques compatibles avec le cofrittage ferrite-argent à environ 900°C. Néanmoins, des problèmes d'interdiffusion et de différence de retrait et de dilatation thermique compliquent la réalisation de tels composants.

Un problème important à résoudre dans ces composants magnétiques est ainsi la non-compatibilité entre le ferrite et le diélectrique. En effet, des retraits différents entraînent des désolidarisations des différents matériaux lors du frittage.

La solution qui est présentée dans la présente invention consiste pour ce faire à utiliser un ferrite à très faible aimantation à saturation, de la même famille que celles des ferrites faibles pertes de type grenat, de sorte à conserver les mêmes éléments chimiques pour les parties magnétiques et non magnétiques, et de sorte à assembler des matériaux céramiques dont les retraits et les coefficients de dilatation sont proches.

L'association des ferrites de type grenat avec de tels « substituants » de diélectriques à basse température de frittage et des métallisations par exemple à base d'argent ou d'or permet ainsi la réalisation de composants magnétiques cofrittés performants, tels que notamment des circulateurs, dans lesquels le ferrite magnétique faibles pertes peut typiquement présenter une aimantation à saturation de l'ordre de 0,2 Tesla pour des fonctionnements à des fréquences élevées (quelques gigaHertz).

Plus précisément la présente invention a pour objet un matériau ferrite de structure grenat à très faible aimantation à saturation caractérisé en ce qu'il répond à la formule chimique suivante :

YₐTR_{b}Bi_{b},Fe_{c}Al_{d}InₑCa_{f}Cu_{g}ZrₕVᵢCoᵢSiₖO_{12±γ}

avec TR : une terre rare ou une combinaison de terres rares, TR ne comprenant pas l'élément Y et :
-1 ≤γ≤1 ;
3 (a+b+b'+c+d+e) + 2 (f+g+j) + 4 (h+k) + 5i = 24±2γ
1 ≤ a ≤ 3,5 ;
0 ≤ b ≤ 1,5 ;
0 < b' ≤ 1 ;
4≤c≤5 ;
0 ≤ d ≤ 1,5 ;
0 ≤ e ≤ 0,8 ;
0 ≤ f ≤ 1;
0 < g < 0,05
0 ≤ i ≤ 0,8 ;
0 ≤ j ≤ 0,5 ;
0 ≤ k ≤ 0,5.
   avec b + d ≥ 1,2.

L'invention a aussi pour objet un matériau ferrite de structure grenat à très faible aimantation à saturation caractérisé en ce qu'il répond à la formule chimique suivante :

YₐTR_{b}Bi_{b},Fe_{c}Al_{d}InₑCa_{f}Cu_{g}ZrₕVᵢCoᵢSiₖO_{12±γ}

avec TR : une terre rare ou une combinaison de terres rares, TR ne comprenant pas l'élément Y et :
-1 ≤ γ ≤ 1 ;
3 (a+b+b'+c+d+e) + 2 (f+g+j) + 4 (h+k) + 5i = 24±2γ
1 ≤ a ≤ 3,5 ;
0 ≤ b ≤ 1,5 ;
0 < b' ≤ 1 ;
4≤c≤5 ;
0 ≤ d ≤ 1,5 ;
0 ≤ e ≤ 0,8 ;
0 ≤ f ≤ 1;
0 < g < 0,05
0 ≤ h ≤ 1 ;
0 ≤ i ≤ 0,8 ;
0 ≤ j ≤ 0,5 ;
0 ≤ k ≤ 0,5.
   avec b + d ≥ 1,2.

La terre rare ou la combinaison de terres rares TR ne comportent pas l'élément Y.

Le Demandeur a pu mettre en évidence que la présence d'éléments de terres rares et/ou d'aluminium, en quantité totale suffisante, permet de diminuer suffisamment l'aimantation à saturation du matériau ferrite de manière à pouvoir notamment l'utiliser en remplacement de diélectrique dans des composants tels que ceux mentionnés précédemment. En effet, une très faible aimantation à saturation permet une diminution significative des pertes magnétiques, voire une suppression des pertes magnétiques, et donc un comportement semblable à celui d'un diélectrique.

Selon des variantes de l'invention, d est inférieur ou égal à 1 permettant de conserver une température de frittage basse, typiquement pouvant être inférieure à 900°C.

Selon des variantes de l'invention, b est inférieur ou égal à 0,8 permettant également de conserver une température de frittage basse, typiquement pouvant être inférieure à 900°C.

Selon des variantes de l'invention, i est non nul, la présence de vanadium contribuant à abaisser la température de frittage du matériau ferrite obtenu, par rapport à un matériau ferrite appartenant à la même famille mais exempt de vanadium.

Selon des variantes de l'invention, la ou les terres rares est (sont) du Gd ou du Dy ou du Tb.

Il est à noter que les ferrites de Dy et de Tb ont des températures de compensation proches de celle du ferrite de Gd, la température de compensation étant la température à laquelle l'aimantation à saturation s'annule.

Selon des variantes de l'invention, l'invention a aussi pour objet un composant caractérisé en ce qu'il comporte un matériau ferrite selon l'invention, et au moins un matériau ferrite de structure grenat répondant à la formule chimique suivante :

YₐTR_{b}Bi_{b},Fe_{c}Al_{d}InₑCa_{f}Cu_{g}ZrₕVᵢCoⱼSiₖO_{12±γ}

avec TR : une terre rare ou une combinaison de terres rares, TR ne comprenant pas l'élément Y et :
-1 ≤γ≤1 ;
3 (a+b+b'+c+d+e) + 2 (f+g+j) + 4 (h+k) + 5i = 24±2γ
1 ≤ a ≤ 3,5 ;
0 ≤ b ≤ 1,5 ;
0 < b' ≤ 1 ;
4≤c≤5 ;
0 ≤ d ≤ 1,5 ;
0 ≤ e ≤ 0,8 ;
0 ≤ f ≤ 1;
0 < g < 0,05 ;
0 ≤ i ≤ 0,8 ;
0 ≤ j ≤ 0,5 ;
0 ≤ k ≤ 0,5.
   avec b + d ≤ 1, d'aimantation à saturation plus élevée que celle du matériau ferrite de la présente invention qui peut typiquement avoir une aimantation à saturation maximale de l'ordre de quelques dizaines de milli Tesla.

L'invention a encore pour objet un composant caractérisé en ce qu'il comporte un matériau ferrite selon l'invention, et au moins un matériau ferrite de structure grenat répondant à la formule chimique suivante :

YₐTR_{b}Bi_{b},Fe_{c}Al_{d}InₑCa_{f}Cu_{g}ZrₕVᵢCoᵢSiₖO_{12±γ}

avec TR : une terre rare ou une combinaison de terres rares, TR ne comprenant pas l'élément Y et :
-1 ≤ γ ≤ 1 ;
3 (a+b+b'+c+d+e) + 2 (f+g+j) + 4 (h+k) + 5i = 24±2γ
1 ≤ a ≤ 3,5 ;
0 ≤ b ≤ 1,5 ;
0 < b' ≤ 1 ;
4≤c≤5 ;
0 ≤ d ≤ 1,5 ;
0 ≤ e ≤ 0,8 ;
0 ≤ f ≤ 1;
0 < g < 0,05 ;
0 ≤ h ≤ 1;
0 ≤ i ≤ 0,8 ;
0 ≤ j ≤ 0,5 ;
0 ≤ k ≤ 0,5.
   avec b + d ≤ 1, d'aimantation à saturation plus élevée que celle du matériau ferrite de la présente invention qui peut typiquement avoir une aimantation à saturation maximale de l'ordre de quelques dizaines de milli Tesla.

Selon des variantes de l'invention, le composant de l'invention comprend en outre également un matériau de type métal.

L'invention a encore pour objet un composant comportant un noyau magnétique en matériau ferrite magnétique de structure grenat répondant à la formule chimique suivante :

YₐTR_{b}Bi_{b},Fe_{c}Al_{d}InₑCa_{f}Cu_{g}ZrₕVᵢCoᵢSiₖO_{12±γ}

avec TR : une terre rare ou une combinaison de terres rares, TR ne comprenant pas l'élément Y et :
-1 ≤ γ ≤ 1 ;
3 (a+b+b'+c+d+e) + 2 (f+g+j) + 4 (h+k) + 5i = 24±2γ
1 ≤ a ≤ 3,5 ;
0 ≤ b ≤ 1,5 ;
0 < b' ≤ 1 ;
4≤c≤5 ;
0 ≤ d ≤ 1,5 ;
0 ≤ e ≤ 0,8 ;
0 ≤ f ≤ 1;
0 < g < 0,05 ;
0 ≤ i ≤ 0,8 ;
0 ≤ j ≤ 0,5 ;
0 ≤ k ≤ 0,5.
   avec b + d ≤ 1 et un matériau ferrite à faible aimantation selon l'invention.

L'invention a encore pour objet un composant comportant un noyau magnétique en matériau ferrite magnétique de structure grenat répondant à la formule chimique suivante :

YₐTR_{b}Bi_{b},Fe_{c}Al_{d}InₑCa_{f}Cu_{g}ZrₕVᵢCoᵢSiₖO_{12±γ}

avec TR : une terre rare ou une combinaison de terres rares, TR ne comprenant pas l'élément Y et :
-1 ≤γ≤1 ;
3 (a+b+b'+c+d+e) + 2 (f+g+j) + 4 (h+k) + 5i = 24±2γ
1 ≤ a ≤ 3,5 ;
0 ≤ b ≤ 1,5 ;
0 < b' ≤ 1 ;
4 ≤ c ≤ 5 ;
0 ≤ d ≤ 1,5 ;
0 ≤ e ≤ 0,8 ;
0 ≤ f ≤ 1;
0 < g < 0,05 ;
0 ≤ h ≤ 1;
0 ≤ i ≤ 0,8 ;
0 ≤ j ≤ 0,5 ;
0 ≤ k ≤ 0,5.
avec b + d ≤ 1 et un matériau ferrite à faible aimantation selon l'invention.

Selon des variantes de l'invention, le composant comporte des multicouches de matériau ferrite à faible aimantation à saturation (< 20 mT) et des multicouches de matériau ferrite magnétique (aimantation à saturation > 800 mT).

Selon des variantes de l'invention, le composant est un circulateur ou un isolateur ou un déphaseur hyperfréquence, pouvant typiquement fonctionner dans une gamme de fréquence d'environ 0,5 GigaHertz à environ 20 GigaHertz.

L'invention a encore pour objet un procédé de fabrication d'un matériau ferrite selon l'invention caractérisé en ce qu'il comprend les étapes suivantes :
- le pesage des matières premières de type oxydes ou carbonates pour obtenir la composition du matériau ferrite ;
- le mélange et un premier broyage des matières premières ;
- le chamottage à une température comprise entre environ 800 et 900°C ;
- un second broyage de la poudre obtenue, suivi d'un pressage ;
- le frittage de ladite poudre rebroyée, à une température comprise entre environ 800 et 1000°C.

Selon des variantes de l'invention, le procédé comprend en outre après l'opération de chamottage, l'ajout d'oxyde de vanadium comme fondant.

Selon des variantes de l'invention, le matériau obtenu après l'opération de chamottage répond à la formule chimique suivante :

Y_{2,28-b}Cu_{0,05}Gd_{b}Bi_{0,67}Fe_{5-d}Al_{d}O₁₂

avec 0 ≤ b ≤ 0,8 et 0 ≤ d ≤ 1
le fondant étant de l'oxyde de vanadium.

Selon des variantes de l'invention, le premier et le second broyage sont effectués en milieu humide.

Selon des variantes de l'invention, le frittage de la poudre rebroyée est effectué sous air ou sous oxygène.

Selon des variantes de l'invention, les opérations de broyage sont effectuées avec un broyeur à boulets et/ou par attrition.

L'invention a aussi pour objet un procédé de fabrication d'un composant comportant plusieurs éléments dont un matériau ferrite selon l'invention à très faible aimantation à saturation, caractérisé en ce que :
- on prépare ledit ferrite par le procédé de fabrication selon l'invention;
- et lors de l'opération de frittage dudit procédé, on solidarise ledit ferrite à au moins un desdits autres éléments dudit composant ou à un précurseur dudit élément par un procédé de cofrittage.

Selon des variantes de l'invention, l'un au moins des autres éléments est un matériau ferrite répondant à la formule chimique suivante :

YₐTR_{b}Bi_{b},Fe_{c}Al_{d}InₑCa_{f}Cu_{g}ZrₕVᵢCoᵢSiₖO_{12±γ}

avec TR : une terre rare ou une combinaison de terres rares, TR ne comprenant pas l'élément Y et :
-1 ≤ γ ≤ 1 ;
3 (a+b+b'+c+d+e) + 2 (f+g+j) + 4 (h+k) + 5i = 24±2γ
1 ≤ a ≤ 3,5 ;
0 ≤ b ≤ 1,5 ;
0 < b' ≤ 1 ;
4 ≤ c ≤ 5 ;
0 ≤ d ≤ 1,5 ;
0 ≤ e ≤ 0,8 ;
0 ≤ f ≤ 1;
0 < g < 0,05 ;
0 ≤ i ≤ 0,8 ;
0 ≤ j ≤ 0,5 ;
0 ≤ k ≤ 0,5.
   avec b + d ≤ 1.

Selon des variantes de l'invention, l'un au moins des autres éléments est un matériau ferrite répondant à la formule chimique suivante :

YₐTR_{b}Bi_{b},Fe_{c}Al_{d}InₑCa_{f}Cu_{g}ZrₕVᵢCoᵢSiₖO_{12±γ}

avec TR : une terre rare ou une combinaison de terres rares, TR ne comprenant pas l'élément Y et :
-1 ≤γ≤1 ;
3 (a+b+b'+c+d+e) + 2 (f+g+j) + 4 (h+k) + 5i = 24±2γ
1 ≤ a ≤ 3,5 ;
0 ≤ b ≤ 1,5 ;
0 < b' ≤ 1 ;
4 ≤ c ≤ 5 ;
0 ≤ d ≤ 1,5 ;
0 ≤ e ≤ 0,8 ;
0 ≤ f ≤ 1;
0 < g < 0,05 ;
0 ≤ h ≤ 1;
0 ≤ i ≤ 0,8 ;
0 ≤ j ≤ 0,5 ;
0 ≤ k ≤ 0,5.
   avec b + d ≤ 1

Selon des variantes de l'invention, l'un au moins des autres éléments est une couche de métal, pouvant être de l'or ou de l'argent.

L'invention sera mieux comprise et d'autres avantages apparaîtront à la lecture de la description qui va suivre donnée à titre non limitatif et grâce aux figures annexées parmi lesquelles :
- la figure 1 schématise une vue éclatée d'un circulateur ferrite-diélectrique selon l'art connu ;
- la figure 2 illustre l'évolution du retrait d'une première série de différents matériaux ferrites de l'invention en fonction de la température ;
- la figure 3 illustre l'évolution du retrait d'une seconde série de différents matériaux ferrites de l'invention en fonction de la température ;
- la figure 4 schématise un ensemble comprenant 3 sous-ensembles constitués de multicouches de matériaux ferrite à faible aimantation/ à très faible aimantation (matériau H non couvert par la portée de la revendication 1)/ à faible aimantation ;
- la figure 5a et 5b illustre l'analyse EDX de différentes zones prises respectivement dans le sous-ensemble multicouches de matériau ferrite à très faible aimantation (région H) et dans le sous-ensemble multicouches de matériau ferrite à faible aimantation ;
- la figure 6 illustre l'évolution des pourcentages massiques pour différents éléments présents dans la formule chimique d'un ferrite donné en fonction d'une position repérée dans l'ensemble constitué des trois mêmes sous-ensembles.

De manière générale, la famille des grenats possède une organisation cristalline particulière : la structure cristallographique est cubique et trois sites particuliers sont occupés. Les ions yttrium se placent en site dodécaédrique et les ions fer sont en sites octaédrique et tétraédrique.

Un exemple de ces matériaux est par exemple le grenat d'yttrium-fer (YIG) de formule chimique {Y³⁺}₃ [Fe³⁺]₂ (Fe³⁺)₃ O₁₂ (YIG) dans laquelle les symboles { }, [ ] et ( ) indiquent respectivement les sites dodécaédriques, octaédriques et tétraédriques.

Ces ferrites présentent de manière générale, de relativement faibles aimantations à saturation (typiquement inférieure à 200 mT) qui permettent, lorsqu'ils sont saturés magnétiquement, de limiter les pertes magnétiques à basse fréquence (1 à 10 GHz) ainsi que des pertes diélectriques faibles. Ainsi le ferrite grenat à base d'yttrium et de fer de formule générique : Y₃Fe₅O₁₂ permet d'obtenir des largeurs de raie de résonance ferromagnétique inférieures à 4000 A/m à 10 GHz et des tangentes de pertes diélectriques inférieures ou égales à 3.10⁻⁴ à 10 GHz.

Néanmoins l'inconvénient de ce type de ferrite réside dans leur température de fabrication très élevée, supérieure à 1450°C, qui a deux conséquences :
- un coût de fabrication élevé du matériau ;
- l'impossibilité de cofritter avec un métal ou une autre céramique.

L''invention propose une nouvelle famille ciblée de ferrites de type grenat de très faible aimantation à saturation (inférieure typiquement à environ 20 mT), grâce à une quantité totale en espèces terres rares et aluminium suffisante et dont la fabrication peut être réalisée à des températures beaucoup plus basses, grâce à la présence simultanée de cuivre et de bismuth. Grâce à ces ajouts, la température de frittage peut en effet être abaissée à 1000°C et on peut donc envisager de cofritter avec des pistes métalliques en or, les céramiques diélectriques de l'invention avec des céramiques magnétiques.

De manière générale les ferrites sont fabriqués selon un procédé classique comprenant les étapes suivantes :
- une étape de pesée des matières premières ;
- une étape de mélange et de broyage des matières premières ;
- une étape de traitement thermique appelée chamottage à température élevée typiquement 1200°C ayant pour but de synthétiser la phase grenat sous forme de poudre ;
- une seconde étape de broyage et de pressage ;
- le frittage à très haute température de la poudre chamottée rebroyée ayant pour but de densifier la céramique tout en lui conférant la forme souhaitée.

Typiquement avec un grenat de type Y₃Fe₅O₁₂, le frittage est effectué à une température comprise entre 1450°C et 1500°C. En ajoutant des constituants de type calcium et vanadium, on peut abaisser cette température à environ 1350°C.

Les matériaux ferrites ciblés dans la présente invention, qu'ils soient à très faible aimantation à saturation ou à aimantation à saturation plus élevée pour des composés mixtes (ferrite amagnétique/ferrite magnétique), comportent des éléments tels que le cuivre, le bismuth et le vanadium et présentent une température de frittage nettement abaissée, de l'ordre de 850 à 950°C.

Leur basse température de frittage réduit le coût de fabrication et rend possible le co-frittage avec d'autres types de matériaux comme par exemple certains métaux tels que l'or, l'argent ou des alliages argent-palladium.

Pour rappel, des ferrites selon l'art connu, constituant le cœur d'un circulateur sont métallisés avec de l'argent déposé le plus souvent par sérigraphie. On vient ensuite coller une ou deux pièces magnétiques polaires (qui créent le champ magnétique polarisant) constituées par un aimant permanent de type hexaferrite ou un alliage samarium-cobalt ou néodyme-fer-bore. En effet selon l'état de l'art il est impossible de co-fritter un ferrite grenat avec un métal car les températures minimales de frittage pour les grenats sont incompatibles avec les températures de fusion des principaux métaux utilisés en microélectroniques (962°C pour l'argent, 1064°C pour l'or...).

Un avantage supplémentaire d'avoir des températures de frittage abaissées est de minimiser les réactions de diffusion des espèces présentes et donc de préserver les compositions chimiques de départ tout en associant mécaniquement les différents matériaux. On peut par ce biais éviter des étapes d'usinage et d'assemblage et ainsi fabriquer des composants hyperfréquences à faible coût.

Un autre avantage important de l'invention est l'obtention d'un composant « tout céramique » qui n'utilise pas de produits organiques. En effet, lors de leur assemblage, les circulateurs/isolateurs de l'état de l'art nécessitent l'utilisation de colle comme par exemple pour les structures composites ferrite-diélectrique ce qui limite notamment leur utilisation dans les applications spatiales ou les applications à haute température.

Suivant les fréquences de fonctionnement et les puissances mises en jeu, on tient compte des caractéristiques suivantes :
- l'aimantation à saturation ;
- les pertes magnétiques à faible niveau de puissance (largeur de raie ΔH ou effective AH_{eff}) ;
- les pertes magnétiques à fort niveau de puissance qui sont reliées à la largeur de raie d'ondes de spins ΔHₖ ;
- les pertes diélectriques ;
- la stabilité en température.

Dans une structure telle que celle de la figure 1, le ferrite central, isolant électriquement, possède de faibles pertes magnétiques et diélectriques à des fréquences de fonctionnement élevées (quelques gigahertz).

Il peut avantageusement appartenir à la famille des grenats telle que celle que le Demandeur a décrit dans sa demande de brevet antérieure WO 2012/042168.

Son aimantation à saturation doit être typiquement de l'ordre de 0,2 Tesla afin de limiter les pertes d'origine magnétique. Les valeurs d'aimantation à saturation peuvent être adaptées par des jeux de substitutions dans les différents sites particuliers de la structure cristalline.

Le ferrite utilisé en remplacement du diélectrique doit avoir une aimantation de quelques milli tesla, voire nulle. (inférieure typiquement à 20 mT).

Une telle faible aimantation permet une diminution significative des pertes magnétiques et donc d'obtenir un comportement semblable à celui du diélectrique. Il est néanmoins primordial de trouver un équilibre entre les différentes substitutions afin de conserver, pour un tel matériau ferrite, des propriétés proches de celles du ferrite central magnétique, en particulier une densification à faible température compatible avec une conception de circulateur « tout ferrite » pouvant être obtenu grâce à la technologie de type « Low Temperature Cofired Ceramics ».

Pour répondre à ces besoins, le Demandeur propose un nouveau matériau ferrite à faible aimantation à saturation pouvant se substituer à l'emploi des diélectriques de l'art connu.

L'utilisation de vanadium permet une diminution de la température de frittage aux alentours de 880 °C. Habituellement utilisé en substitution dans la maille, le Demandeur a étudié son efficacité comme fondant.

Par ailleurs, l'ajout d'aluminium à la place du fer permet une diminution de l'aimantation à saturation sans augmentation de ses pertes magnétiques ainsi qu'une diminution importante de la température de Curie. Un taux trop important d'aluminium entraine néanmoins une dégradation de la densification à basse température.

Et l'ajout de gadolinium à la place de l'yttrium permet une diminution de l'aimantation à saturation sans diminuer la température de Curie.

La largeur de raie d'ondes de spins ΔHₖ est également améliorée, contrairement à ΔH et ΔH_{eff}.

Avec un grenat comme le YIG, l'étape de frittage est réalisée aux alentours de 1500 °C.

L'ajout de bismuth et de cuivre dans la structure ainsi que du vanadium permet de diminuer cette température de frittage à environ 880 °C. Cette basse température de frittage permet d'envisager un cofrittage avec des pistes métalliques en argent. Il est donc possible de réaliser en une seule étape un dispositif souhaité par exemple un circulateur.

Afin d'étudier l'influence des substitutions, le Demandeur a réalisé différents matériaux ferrites référencés ci-après :
- Ferrite A : Y₃Fe₅O₁₂
- Ferrite B : Y_{2,28}Cu_{0,05}Bi_{0,67}Fe₅O₁₂
- Ferrite C : Y_{2,27}Cu_{0,05}Ca_{0,01}Bi_{0,67}Fe_{4,97}V_{0,03}O₁₂
- Ferrite D : Y_{2,28}Cu_{0,05}Bi_{0,67}Fe₅O₁₂ + V₂O₅ fondant
- Ferrite E : Y_{2,08}Cu_{0,05}Gd_{0,2}Bi_{0,67}Fe_{4,8}Al_{0,2}O₁₂ + V₂O₅ fondant
- Ferrite F : Y_{2,097}Cu_{0,05}Bi_{0,67}Gd_{0,2}Fe_{4,8}Al_{0,2}O₁₂
- Ferrite G : Y_{1,87}Cu_{0,05}Ca_{0,01}Bi_{0,67}Gd_{0,4}Fe_{4,57}Al_{0,4}V_{0,03}O₁₂
- Ferrite H : Y_{1,98}Cu_{0,05}Gd_{0,4}Bi_{0,67}Fe_{4,8}Al₀,₄O₁₂ + V₂O₅ fondant
- Ferrite I : Y_{1,78}Cu_{0,05}Gd_{0,6}Bi_{0,67}Fe_{4,8}Al_{0,6}O₁₂ + V₂O₅ fondant
- Ferrite J : Y_{1,58}Cu_{0,05}Gd_{0,8}Bi_{0,67}Fe_{4,8}Al_{0,8}O₁₂ + V₂O₅ fondant

Les ferrites B à G sont chamottés entre 800 et 900 °C.

Le Demandeur a réalisé des études sur les matériaux sous différentes formes :
- cylindres, pastilles mis en forme dans des moules ;
- bandes coulées laminées à environ 70 °C pendant 1 heure.

Le Demandeur a notamment réalisé différents tests pour comparer les propriétés de matériau présentant une composition sans oxyde de vanadium ou une composition avec ajout dans la maille ou une composition ayant été obtenue avec ajout supplémentaire d'oxyde de vandium comme fondant (ajouté après l'opération de chamottage).

Les propriétés de densification des ferrites E, F et G sont comparées afin de connaître l'efficacité de l'ajout de vanadium dans la maille ou comme fondant après le chamottage. L'ajout de vanadium comme fondant se fait grâce à un mixeur pendant 20 secondes. Ce cycle de mixage est répété trois fois.

Dans le Tableau 1 ci-après sont exposés les masses volumiques et les retraits obtenus pour les matériaux E, F et G frittés à 880, 900 et 950 °C.

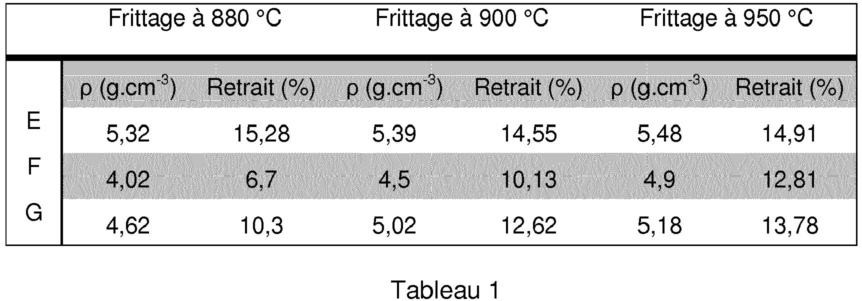

Les résultats présentés dans le Tableau 1 ci-dessus montrent que l'ajout d'oxyde de vanadium est indispensable à l'obtention d'une bonne masse volumique. On remarque aussi que, contrairement aux composants sans Al³⁺ et sans Gd³⁺, la densification est plus efficace lorsque cet oxyde est ajouté en partie après le chamottage grâce à l'utilisation d'un mixeur.

Afin de confirmer ces résultats, des études de la densification ont été réalisées par analyse thermomécanique.

Les courbes de la figure 2 montrent l'effet de l'oxyde de vanadium en termes de % de retrait et ce en fonction de la température et fournit notamment des courbes de retrait pour les matériaux ferrites F, H et G.

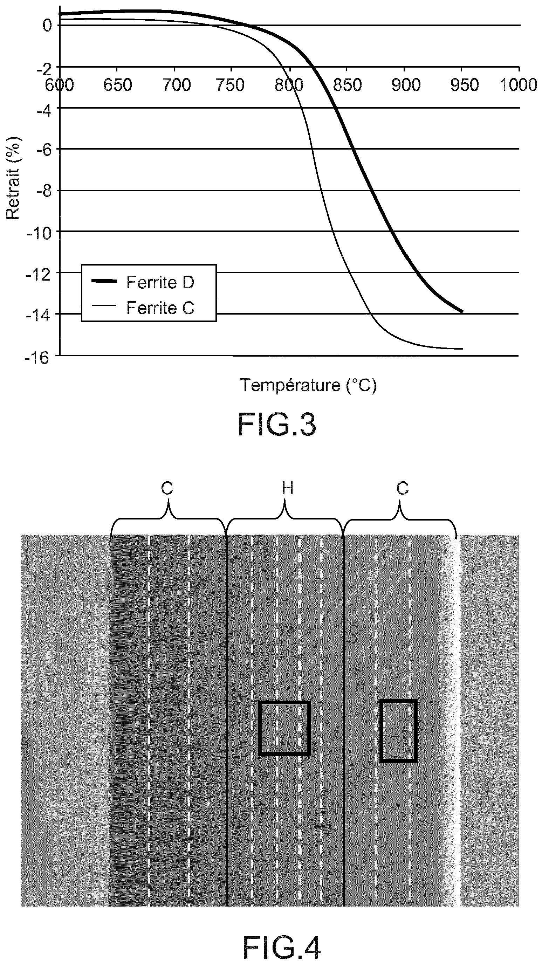

Les courbes de la figure 3 illustrent également le pourcentage de retrait en fonction de la température pour les matériaux ferrites D et C.

Ces mesures confirment que l'ajout d'oxyde de vanadium comme fondant est plus efficace.

En absence d'aluminium et de gadolium, l'effet est inverse.

Il est donc particulièrement intéressant d'ajouter de l'oxyde de vanadium en tant que fondant pour obtenir un matériau ferrite à faible aimantation, selon l'invention.

Comparaison des propriétés des matériaux à combiner (avec et sans Al³⁺ et Gd³⁺) :

### Masse volumique :

Les masses volumiques obtenues pour des frittages à 880, 900 et 950 °C de cylindres sont exposées dans le Tableau 2. En effet, dans le but de créer un circulateur tout ferrite, il est important que les propriétés de densification de deux matériaux utilisés côte à côte soient proches.

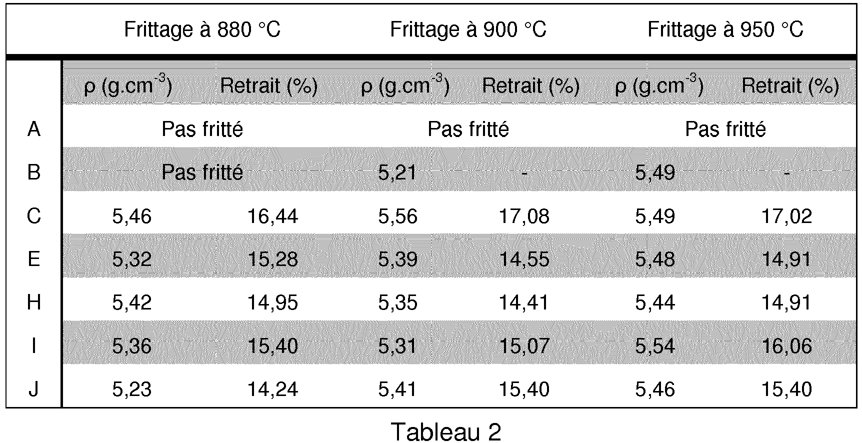

Les résultats obtenus sur la masse volumique des différents matériaux substitués aluminium et gadolinium sont proches et permettent, du point de vue de la densification, une compatibilité des différents matériaux.

Cette compatibilité au niveau des retraits et masses volumiques est indispensable. En effet, dans le cadre de la technologie LTCC, cette propriété permet d'éviter le délaminage et les déformations de l'assemblage.

### Aimantation à saturation ;

Pour le matériau central, une aimantation aux alentours de 0,16 T est souhaitable pour une application hyperfréquence en bande X (8 - 12 GHz).

Le matériau extérieur, destiné à remplacer le diélectrique, doit avoir une aimantation la plus faible possible. Il s'agit de diminuer au maximum l'aimantation tout en préservant des propriétés de densification et des pertes diélectriques proches de celles du ferrite central.

Les aimantations à saturation en mT ont été déterminées. Les résultats obtenus sont exposés dans le Tableau 3 ci-après.

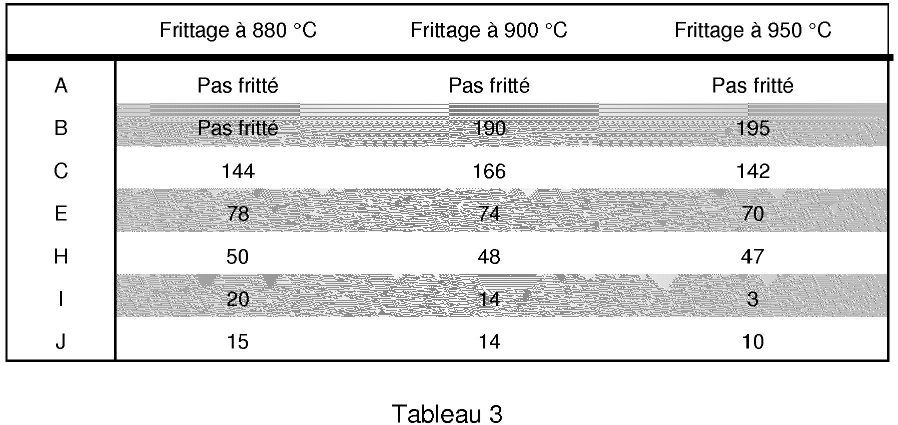

Grâce aux différentes substitutions réalisées, il a été possible de diminuer l'aimantation à de très faibles valeurs qui permettraient l'utilisation du matériau en remplacement du diélectrique. D'autant qu'une diminution très significative de l'aimantation entraîne une importante diminution des pertes d'origine magnétique.

### Permittivités et pertes diélectriques à 50 MHz :

Le Demandeur a pour les deux types de matériaux, déterminé les permittivités. En effet, il est important que celles-ci soient du même ordre de grandeur afin que les largeurs des lignes conductrices restent proches sur les matériaux central et extérieur. Les permittivités doivent tout de même respecter certaines valeurs : par exemple, une permittivité trop élevée entraînera des largeurs de ligne trop faibles, difficiles à sérigraphier.

Pour le grenat d'yttrium fer (ferrite A), la permittivité se situe aux alentours de 15. Dans le cadre des applications circulateur hyperfréquence et en vue d'une diminution des volumes des composants, des permittivités d'environ 20-25 sont recherchées.

Les résultats obtenus à 50 MHz pour la permittivité sont exposés dans le Tableau 4 ci-après :

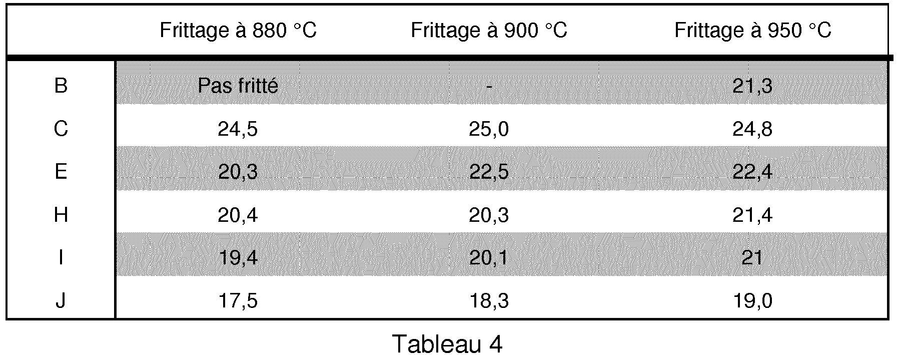

Il est également important d'avoir de faibles pertes diélectriques. Dans le Tableau T5 ci-après, les résultats obtenus pour des mesures de tg δ à 50 MHz sont exposés. Pour le YIG, on observe une permittivité à 50 MHz de 17 et des pertes diélectriques de l'ordre de 6.10⁻³.

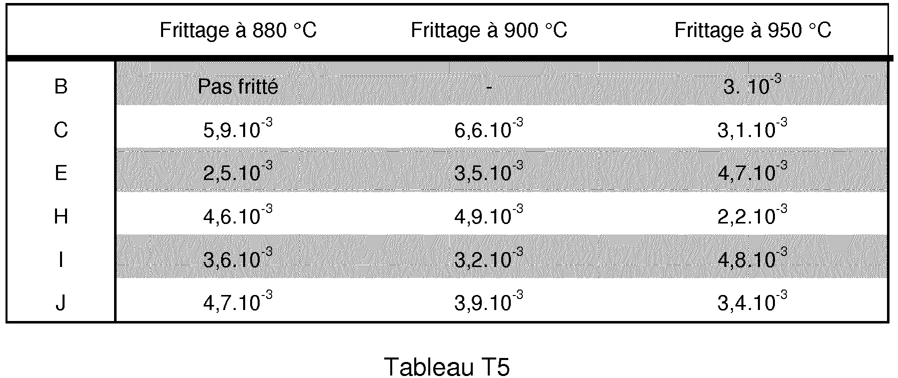

Les valeurs obtenues pour les permittivités et les pertes, en comparaison avec celles d'un ferrite de référence, le YIG, sont adaptées à la réalisation d'un circulateur tout ferrite.

### Diffusion entre les matériaux :

Afin de pouvoir combiner ces deux matériaux aux propriétés proches, un dernier point a été étudié. Il est en effet primordial qu'il y ait très peu de diffusion entre les matériaux. Si une migration des ions Al³⁺ et Gd³⁺ est constatée, les propriétés du ferrite central seront altérées.

Dans le but d'étudier cette diffusion, le Demandeur a réalisé une superposition de bandes préparées par coulage des différents matériaux qui a été ensuite laminée et puis frittée.

La figure 4 illustre ainsi un ensemble comportant trois sous-ensembles multicouches, respectivement de matériau ferrite C/ de matériau ferrite à très faible aimantation H/ de matériau ferrite C.

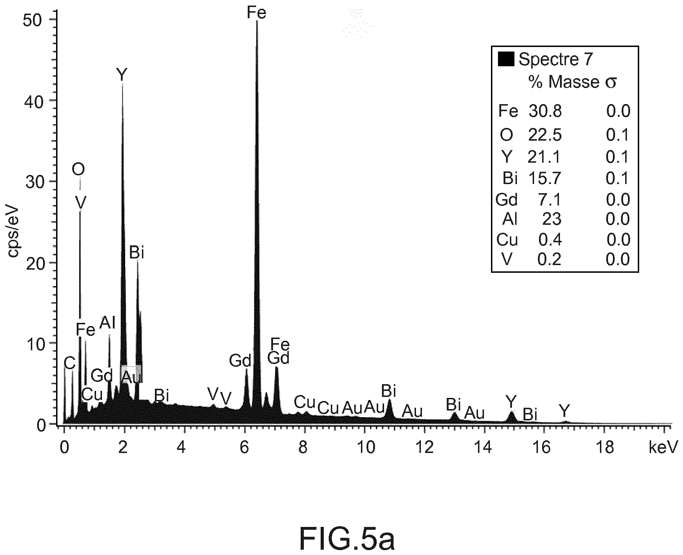

Une analyse EDX (analyse dispersive en énergie) des différentes zones du matériau a permis de montrer la non-diffusion de l'aluminium et du gadolinium. Les résultats sont exposés sur les spectres illustrés en figures 5a (relatif à la zone centrale d'un sous-ensemble de couches de matériau H) et 5b (relatif à la zone centrale d'un sous-ensemble de couches de matériau C).

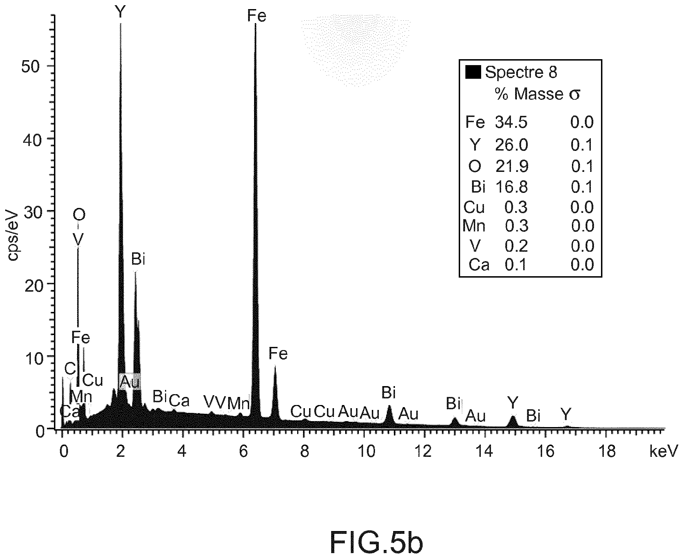

Des traces de Mn, présentes dans les produits initiaux (matières premières), se retrouvent au niveau du spectre du matériau ferrite C (figure 5b), en revanche elles sont masquées par la présence de Gd dans le matériau ferrite H (figure 5a).

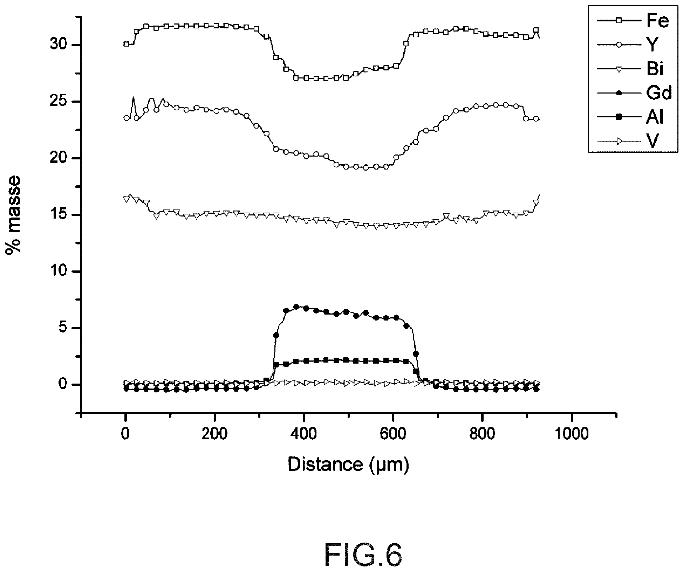

La figure 6 illustre l'évolution des pourcentages massiques pour différents éléments présents dans la formule chimique en fonction d'une position repérée dans l'ensemble constitué des trois mêmes sous-ensembles C/H/C. On observe ainsi sur le graphe de la figure 6 une apparition nette : d'aluminium et de gadolinium lors du passage du matériau magnétique au matériau faiblement magnétique. Cette augmentation du taux d'Al³⁺ et de Gd³⁺ est complémentaire d'une diminution des taux de Fe³⁺ et Y³⁺ (les ions substitués).

## Revendications

1. Matériau ferrite de structure grenat à très faible aimantation à saturation **caractérisé en ce qu'**il répond à la formule chimique suivante :
YₐTR_{b}Bi_{b},Fe_{c}Al_{d}InₑCa_{f}Cu_{g}ZrₕVᵢCoⱼSiₖO_{12±γ}
avec TR : une terre rare ou une combinaison de terres rares, TR ne comprenant pas l'élément Y et :
-1 ≤ γ ≤ 1 ;
3 (a+b+b'+c+d+e) + 2 (f+g+j) + 4 (h+k) + 5i = 24±2γ
1 ≤ a ≤ 3,5 ;
0 ≤ b ≤ 1,5 ;
0 < b' ≤ 1 ;
4 ≤ c ≤ 5 ;
0 ≤ d ≤ 1,5 ;
0 ≤ e ≤ 0,8 ;
0 ≤ f ≤ 1 ;
0 < g < 0,05 ;
0 ≤ i ≤ 0,8 ;
0 ≤ j ≤ 0,5 ;
0 ≤ k ≤ 0,5.
avec b + d ≥ 1,2.

2. Matériau ferrite de structure grenat à très faible aimantation à saturation selon la revendication 1, **caractérisé en ce qu'**il répond à la formule chimique suivante :
YₐTR_{b}Bi_{b},Fe_{c}Al_{d}InₑCa_{f}Cu_{g}ZrₕVᵢCoⱼSiₖO_{12±γ}
avec TR : une terre rare ou une combinaison de terres rares, TR ne comprenant pas l'élément Y et :
-1 ≤ γ ≤ 1 ;
3 (a+b+b'+c+d+e) + 2 (f+g+j) + 4 (h+k) + 5i = 24±2y
1 ≤ a ≤ 3,5 ;
0 ≤ b ≤ 1,5 ;
0 < b' ≤ 1 ;
4 ≤ c ≤ 5 ;
0 ≤ d ≤ 1,5 ;
0 ≤ e ≤ 0,8 ;
0 ≤ f ≤ 1 ;
0 < g < 0,05 ;
0 ≤ h ≤ 1 ;
0 ≤ i ≤ 0,8 ;
0 ≤ j ≤ 0,5 ;
0 ≤ k ≤ 0,5.
avec b + d ≥ 1,2.

3. Matériau ferrite de structure grenat selon l'une des revendications 1 ou 2, dans lequel d ≤ 1.

4. Matériau ferrite de structure grenat selon l'une des revendications 1 à 3, dans lequel b ≤ 0,8.

5. Matériau ferrite de structure grenat selon l'une des revendications 1 à 4, dans lequel i est non nul.

6. Matériau ferrite de structure grenat selon l'une des revendications 1 à 5, la ou les terres rares étant du Gd ou du Dy ou du Tb.

7. Composant **caractérisé en ce qu'**il comporte un matériau ferrite selon l'une des revendications 1 à 6, et au moins un matériau ferrite de structure grenat répondant à la formule chimique suivante :
YₐTR_{b}Bi_{b},Fe_{c}Al_{d}InₑCa_{f}Cu_{g}ZrₕVᵢCoⱼSiₖO_{12±γ}
avec TR : une terre rare ou une combinaison de terres rares TR ne comprenant pas l'élément Y et :
-1 ≤ γ ≤ 1 ;
3 (a+b+b'+c+d+e) + 2 (f+g+j) + 4 (h+k) + 5i = 24±2γ
1 ≤ a≤ 3,5 ;
0 ≤ b ≤ 1,5 ;
0 < b' ≤ 1 ;
4 ≤ c ≤ 5 ;
0 ≤ d ≤ 1,5 ;
0 ≤ e ≤ 0,8 ;
0 ≤ f ≤ 1 ;
0 < g < 0,05 ;
0 ≤ i ≤ 0,8 ;
0 ≤ j ≤ 0,5 ;
0 ≤ k ≤ 0,5.
avec b + d ≤ 1.

8. Composant **caractérisé en ce qu'**il comporte un matériau ferrite selon l'une des revendications 1 à 6, et au moins un matériau ferrite de structure grenat répondant à la formule chimique suivante :
YₐTR_{b}Bi_{b},Fe_{c}Al_{d}InₑCa_{f}Cu_{g}ZrₕVᵢCoⱼSiₖO_{12±γ}
avec TR : une terre rare ou une combinaison de terres rares, TR ne comprenant pas l'élément Y et :
-1 ≤ γ ≤ 1 ;
3 (a+b+b'+c+d+e) + 2 (f+g+j) + 4 (h+k) + 5i = 24±2γ
1 ≤ a≤ 3,5 ;
0 ≤ b ≤ 1,5 ;
0 < b' ≤ 1 ;
4 ≤ c ≤ 5 ;
0 ≤ d ≤ 1,5 ;
0 ≤ e ≤ 0,8 ;
0 ≤ f ≤ 1 ;
0 < g < 0,05 ;
0 ≤ h ≤ 1;
0 ≤ i ≤ 0,8 ;
0 ≤ j ≤ 0,5 ;
0 ≤ k ≤ 0,5.
avec b + d ≤ 1.

9. Composant selon l'une des revendications 7 ou 8, comprenant en outre au moins un matériau de type métal.

10. Composant comportant un noyau magnétique en matériau ferrite de structure grenat à faible aimantation répondant à la formule chimique suivante :
YₐTR_{b}Bi_{b},Fe_{c}Al_{d}InₑCa_{f}Cu_{g}ZrₕVᵢCoⱼSiₖO_{12±γ}
avec TR : une terre rare ou une combinaison de terres rares, TR ne comprenant pas l'élément Y et :
-1 ≤ γ ≤ 1 ;
3 (a+b+b'+c+d+e) + 2 (f+g+j) + 4 (h+k) + 5i = 24±2γ
1 ≤ a ≤ 3,5;
0 ≤ b ≤ 1,5 ;
0 < b' ≤ 1 ;
4 ≤ c ≤ 5 ;
0 ≤ d ≤ 1,5 ;
0 ≤ e ≤ 0,8 ;
0 ≤ f ≤ 1 ;
0 < g < 0,05 ;
0 ≤ i≤ 0,8 ;
0 ≤ j ≤ 0,5 ;
0 ≤ k ≤ 0,5.
avec b + d ≤ 1
et un matériau ferrite à très faible aimantation à saturation selon l'une des revendications selon l'une des revendications 1 à 6.

11. Composant comportant un noyau magnétique en matériau ferrite de structure grenat à faible aimantation répondant à la formule chimique suivante :
YₐTR_{b}Bi_{b},Fe_{c}Al_{d}InₑCa_{f}Cu_{g}ZrₕVᵢCoⱼSiₖO_{12±γ}
avec TR : une terre rare ou une combinaison de terres rares, TR ne comprenant pas l'élément Y et :
-1 ≤ γ ≤ 1 ;
3 (a+b+b'+c+d+e) + 2 (f+g+j) + 4 (h+k) + 5i = 24±2γ
1 ≤ a ≤ 3,5 ;
0 ≤ b ≤ 1,5 ;
0 < b' ≤ 1 ;
4 ≤ c ≤ 5 ;
0 ≤ d ≤ 1,5 ;
0 ≤ e ≤ 0,8 ;
0 ≤ f ≤ 1 ;
0 < g < 0,05 ;
0 ≤ h ≤ 1 ;
0 ≤ i ≤ 0,8 ;
0 ≤ j ≤ 0,5 ;
0 ≤ k ≤ 0,5.
avec b + d ≤ 1 et un matériau ferrite à très faible aimantation à saturation selon l'une des revendications 1 à 6.

12. Composant selon l'une des revendications 7 à 11, **caractérisé en ce que** ledit composant comporte des multicouches de matériau ferrite à très faible aimantation à saturation et des multicouches de matériau ferrite magnétique.

13. Composant selon l'une des revendications 7 à 12, **caractérisé en ce qu'**il est un circulateur ou un isolateur ou un déphaseur hyperfréquence.

14. Composant selon l'une des revendications 7 à 13, fonctionnant dans une gamme de fréquence d'environ 0,5 GigaHertz à environ 20 GigaHertz.

15. Procédé de fabrication d'un matériau ferrite selon l'une des revendications 1 à 6, **caractérisé en ce qu'**il comprend les étapes suivantes :
- le pesage des matières premières de type oxydes ou carbonates pour obtenir la composition du matériau ferrite ;
- le mélange et un premier broyage des matières premières ;
- le chamottage à une température comprise entre environ 800 et 900°C ;
- un second broyage de la poudre obtenue, suivi d'un pressage ;
- le frittage de ladite poudre rebroyée à une température comprise entre environ 800 et 1000°C.

16. Procédé de fabrication selon la revendication 15, **caractérisé en ce qu'**il comprend en outre après l'opération de chamottage, l'ajout d'oxyde de vanadium comme fondant.

17. Procédé de fabrication selon la revendication 16, **caractérisé en ce que** le matériau obtenu après l'opération de chamottage répond à la formule chimique suivante :
Y_{2,28-b}Cu_{0,05}Gd_{b}Bi_{0,67}Fe_{5-d}Al_{d}O₁₂
avec 0 ≤ d ≤ 1 et 0 ≤ b ≤ 0,8, le fondant étant de l'oxyde de vanadium.

18. Procédé de fabrication selon l'une des revendications 15 à 17, **caractérisé en ce que** le premier et le second broyage sont effectués en milieu humide.

19. Procédé de fabrication selon l'une des revendications 15 à 18, **caractérisé en ce que** le frittage de la poudre rebroyée est effectué sous air ou sous oxygène.

20. Procédé de fabrication selon l'une des revendications 15 à 19, **caractérisé en ce que** les opérations de broyage sont effectuées avec un broyeur à boulets et/ou par attrition.

21. Procédé de fabrication d'un composant comportant plusieurs éléments dont un matériau ferrite selon l'une des revendications 1 à 6 à très faible aimantation à saturation, **caractérisé en ce que** :
- on prépare ledit ferrite par le procédé selon l'une des revendications 15 à 20 ;
- et lors de l'opération de frittage dudit procédé, on solidarise ledit ferrite à au moins un desdits autres éléments dudit composant ou à un précurseur dudit élément par un procédé de cofrittage.

22. Procédé selon la revendication 21, **caractérisé en ce que** l'un au moins des autres éléments est un matériau ferrite répondant à la formule chimique suivante :
YₐTR_{b}Bi_{b},Fe_{c}Al_{d}InₑCa_{f}Cu_{g}ZrₕVᵢCoⱼSiₖO_{12±γ}
avec TR : une terre rare ou une combinaison de terres rares, TR ne comprenant pas l'élément Y et :
-1 ≤ γ ≤ 1 ;
3 (a+b+b'+c+d+e) + 2 (f+g+j) + 4 (h+k) + 5i = 24±2γ
1 ≤ a ≤ 3,5;
0 ≤ b ≤ 1,5 ;
0 < b' ≤ 1 ;
4 ≤ c ≤ 5 ;
0 ≤ d ≤ 1,5 ;
0 ≤ e ≤ 0,8 ;
0 ≤ f ≤ 1 ;
0 < g < 0,05 ;
0 ≤ i ≤ 0,8 ;
0 ≤ j ≤ 0,5 ;
0 ≤ k ≤ 0,5.
avec b + d ≤ 1.

23. Procédé selon la revendication 21, **caractérisé en ce que** l'un au moins des autres éléments est un matériau ferrite répondant à la formule chimique suivante :
YₐTR_{b}Bi_{b},Fe_{c}Al_{d}InₑCa_{f}Cu_{g}ZrₕVᵢCoⱼSiₖO_{12±γ}
avec TR : une terre rare ou une combinaison de terres rares, TR ne comprenant pas l'élément Y et :
-1 ≤ γ ≤ 1 ;
3 (a+b+b'+c+d+e) + 2 (f+g+j) + 4 (h+k) + 5i = 24±2γ
1 ≤ a ≤ 3,5;
0 ≤ b ≤ 1,5 ;
0 < b' ≤ 1 ;
4 ≤ c ≤ 5 ;
0 ≤ d ≤ 1,5 ;
0 ≤ e ≤ 0,8 ;
0 ≤ f ≤ 1 ;
0 < g < 0,05 ;
0 ≤ h ≤ 1 ;
0 ≤ i ≤ 0,8 ;
0 ≤ j ≤ 0,5 ;
0 ≤ k ≤ 0,5.
avec b + d ≤ 1.

24. Procédé selon l'une des revendications 22 ou 23, **caractérisé en ce que** l'un au moins des autres éléments est une couche de métal.

## Patentansprüche

1. Ferritmaterial mit Granatstruktur mit sehr niedriger Sättigungsmagnetisierung, **dadurch gekennzeichnet, dass** es der folgenden chemischen Formel entspricht:
YₐTR_{b}Bi_{b'}Fe_{c}Al_{d}InₑCa_{f}Cu_{g}ZrₕVᵢCoⱼSiₖO_{12±γ}
wobei TR eine seltene Erde oder eine Kombination von seltenen Erden ist, wobei TR das Element Y nicht umfasst, und:
-1 ≤ γ ≤ 1 ;
3 (a+b+b'+c+d+e) + 2 (f+g+j) + 4 (h+k) + 5i = 24±2γ
1 ≤ a ≤ 3,5;
0 ≤ b ≤ 1,5;
0 < b' ≤ 1;
4 ≤ c ≤ 5;
0 ≤ d ≤ 1,5;
0 ≤ e ≤ 0,8;
0 ≤ f ≤ 1;
0 < g < 0,05;
0 ≤ i ≤ 0,8;
0 ≤ j ≤ 0,5;
0 ≤ k ≤ 0,5,
wobei b + d ≥ 1,2 ist.

2. Ferritmaterial mit Granatstruktur mit sehr niedriger Sättigungsmagnetisierung nach Anspruch 1, **dadurch gekennzeichnet, dass** es der folgenden chemischen Formel entspricht:
YₐTR_{b}Bi_{b'}Fe_{c}Al_{d}InₑCa_{f}Cu_{g}ZrₕVᵢCoⱼSiₖO_{12±γ}
wobei TR eine seltene Erde oder eine Kombination von seltenen Erden ist, wobei TR das Element Y nicht umfasst, und:
-1 ≤ γ ≤ 1 ;
3 (a+b+b'+c+d+e) + 2 (f+g+j) + 4 (h+k) + 5i = 24±2γ
1 ≤ a ≤ 3,5;
0 ≤ b ≤ 1,5;
0 < b' ≤ 1;
4 ≤ c ≤ 5;
0 ≤ d ≤ 1,5;
0 ≤ e ≤ 0,8;
0 ≤ f ≤ 1;
0 < g < 0,05;
0 ≤ h ≤ 1;
0 ≤ i ≤ 0,8;
0 ≤ j ≤ 0,5;
0 ≤ k ≤ 0,5,
wobei b + d ≥ 1,2 ist.

3. Ferritmaterial mit Granatstruktur nach Anspruch 1 oder 2, wobei d ≤ 1 ist.

4. Ferritmaterial mit Granatstruktur nach einem der Ansprüche 1 bis 3, wobei b ≤ 0,8 ist.

5. Ferritmaterial mit Granatstruktur nach einem der Ansprüche 1 bis 4, bei dem i ungleich null ist.

6. Ferritmaterial mit Granatstruktur nach einem der Ansprüche 1 bis 5, wobei die seltene(n) Erde(n) Gd oder Dy oder Tb sind.

7. Komponente, **dadurch gekennzeichnet, dass** sie ein Ferritmaterial nach einem der Ansprüche 1 bis 6 und mindestens ein Ferritmaterial mit Granatstruktur entsprechend der folgenden chemischen Formel aufweist:
YₐTR_{b}Bi_{b'}Fe_{c}Al_{d}InₑCa_{f}Cu_{g}ZrₕVᵢCoⱼSiₖO_{12±γ}
wobei TR eine seltene Erde oder eine Kombination von seltenen Erden ist, wobei TR das Element Y nicht umfasst, und:
-1 ≤ γ ≤ 1 ;
3 (a+b+b'+c+d+e) + 2 (f+g+j) + 4 (h+k) + 5i = 24±2γ
1 ≤ a ≤ 3,5;
0 ≤ b ≤ 1,5;
0 < b' ≤ 1;
4 ≤ c ≤ 5;
0 ≤ d ≤ 1,5;
0 ≤ e ≤ 0,8;
0 ≤ f ≤ 1;
0 < g < 0,05;
0 ≤ i ≤ 0,8;
0 ≤ j ≤ 0,5;
0 ≤ k ≤ 0,5,
wobei b + d ≤ 1 ist.

8. Komponente, **dadurch gekennzeichnet, dass** sie ein Ferritmaterial nach einem der Ansprüche 1 bis 6 und mindestens ein Ferritmaterial mit Granatstruktur entsprechend der folgenden chemischen Formel aufweist:
YₐTR_{b}Bi_{b'}Fe_{c}Al_{d}InₑCa_{f}Cu_{g}ZrₕVᵢCoⱼSiₖO_{12±γ}
wobei TR eine seltene Erde oder eine Kombination von seltenen Erden ist, wobei TR das Element Y nicht umfasst, und:
-1 ≤ γ ≤ i;
3 (a+b+b'+c+d+e) + 2 (f+g+j) + 4 (h+k) + 5i = 24±2γ
1 ≤ a ≤ 3,5;
0 ≤ b ≤ 1,5;
0 < b' ≤ 1;
4 ≤ c ≤ 5;
0 ≤ d ≤ 1,5;
0 ≤ e ≤ 0,8;
0 ≤ f ≤ 1;
0 < g < 0,05;
0 ≤ h ≤ 1;
0 ≤ i ≤ 0,8;
0 ≤ j ≤ 0,5;
0 ≤ k ≤ 0,5,
wobei b + d ≤ 1 ist.

9. Komponente nach Anspruch 7 oder 8, die ferner mindestens ein Material des Metalltyps umfasst.

10. Komponente, die einen Magnetkern aus einem Ferritmaterial mit Granatstruktur mit niedriger Magnetisierung entsprechend der folgenden chemischen Formel aufweist:
YₐTR_{b}Bi_{b'}Fe_{c}Al_{d}InₑCa_{f}Cu_{g}ZrₕVᵢCoⱼSiₖO_{12±γ}
wobei TR eine seltene Erde oder eine Kombination von seltenen Erden ist, wobei TR das Element Y nicht umfasst, und:
-1 ≤ γ ≤ 1;
3 (a+b+b'+c+d+e) + 2 (f+g+j) + 4 (h+k) + 5i = 24±2γ
1 ≤ a ≤ 3,5;
0 ≤ b ≤ 1,5;
0 < b' ≤ 1;
4 ≤ c ≤ 5;
0 ≤ d ≤ 1,5;
0 ≤ e ≤ 0,8;
0 ≤ f ≤ 1;
0 < g < 0,05;
0 ≤ i ≤ 0,8;
0 ≤ j ≤ 0,5;
0 ≤ k ≤ 0,5,
wobei b + d ≤ 1 ist,
und ein Ferritmaterial mit sehr niedriger Sättigungsmagnetisierung nach einem der Ansprüche 1 bis 6.

11. Komponente, die einen Magnetkern aus einem Ferritmaterial mit Granatstruktur mit niedriger Magnetisierung entsprechend der folgenden chemischen Formel aufweist:
YₐTR_{b}Bi_{b'}Fe_{c}Al_{d}InₑCa_{f}Cu_{g}ZrₕVᵢCoⱼSiₖO_{12±γ}
wobei TR eine seltene Erde oder eine Kombination von seltenen Erden ist, wobei TR das Element Y nicht umfasst, und:
-1 ≤ γ ≤ 1 ;
3 (a+b+b'+c+d+e) + 2 (f+g+j) + 4 (h+k) + 5i = 24±2γ
1 ≤ a ≤ 3,5;
0 ≤ b ≤ 1,5;
0 < b' ≤ 1;
4 ≤ c ≤ 5;
0 ≤ d ≤ 1,5;
0 ≤ e ≤ 0,8;
0 ≤ f ≤ 1;
0 < g < 0,05;
0 ≤ h ≤ 1;
0 ≤ i ≤ 0,8;
0 ≤ j ≤ 0,5;
0 ≤ k ≤ 0,5,
wobei b + d ≤ 1 ist, und einem Ferritmaterial mit sehr niedriger Sättigungsmagnetisierung nach einem der Ansprüche 1 bis 6.

12. Komponente nach einem der Ansprüche 7 bis 11, **dadurch gekennzeichnet, dass** die Komponente mehrere Ferritmaterialschichten mit sehr niedriger Sättigungsmagnetisierung und mehrere magnetische Ferritmaterialschichten aufweist.

13. Komponente nach einem der Ansprüche 7 bis 12, **dadurch gekennzeichnet, dass** sie einen Mikrowellenzirkulator oder -isolator oder -phasenschieber ist.

14. Komponente nach einem der Ansprüche 7 bis 13, die in einem Frequenzbereich von etwa 0,5 GigaHertz bis etwa 20 GigaHertz arbeitet.

15. Verfahren zur Herstellung eines Ferritmaterials nach einem der Ansprüche 1 bis 6, **dadurch gekennzeichnet, dass** es die folgenden Schritte umfasst:
- Wiegen von Rohstoffen des Oxid- oder Carbonattyps, um die Zusammensetzung des Ferritmaterials zu erhalten;
- Mischen und erstes Zerkleinern der Rohstoffe;
- Schamottieren bei einer Temperatur zwischen etwa 800 und 900°C;
- zweites Zerkleinern des erhaltenen Pulvers, gefolgt von Pressen;
- Sintern des zerkleinerten Pulvers bei einer Temperatur zwischen etwa 800 und 1000°C.

16. Herstellungsverfahren nach Anspruch 15, **dadurch gekennzeichnet, dass** es ferner nach dem Schamottiervorgang das Zugeben von Vanadiumoxid als Flussmittel umfasst.

17. Herstellungsverfahren nach Anspruch 16, **dadurch gekennzeichnet, dass** das nach dem Schamottiervorgang erhaltene Material der folgenden chemischen Formel entspricht:
Y_{2.28-b}Cu_{0.05}Gd_{b}Bi_{0.67}Fe_{5-d}Al_{d}O₁₂
wobei 0 ≤ d ≤ 1 und 0 ≤ b ≤ 0,8 ist, wobei das Flussmittel Vanadiumoxid ist.

18. Herstellungsverfahren nach einem der Ansprüche 15 bis 17, **dadurch gekennzeichnet, dass** die erste und zweite Zerkleinerung in einer feuchten Umgebung erfolgen.

19. Herstellungsverfahren nach einem der Ansprüche 15 bis 18, **dadurch gekennzeichnet, dass** das Sintern des zerkleinerten Pulvers unter Luft oder unter Sauerstoff erfolgt.

20. Herstellungsverfahren nach einem der Ansprüche 15 bis 19, **dadurch gekennzeichnet, dass** die Zerkleinerungsvorgänge mit einer Kugelmühle oder durch Abrieb erfolgen.

21. Herstellungsverfahren für eine Komponente, die eine Mehrzahl von Elementen aufweist, darunter ein Ferritmaterial nach einem der Ansprüche 1 bis 6 mit sehr niedriger Sättigungsmagnetisierung, **dadurch gekennzeichnet, dass**:
- das Ferrit mit dem Verfahren nach einem der Ansprüche 15 bis 20 hergestellt wird;
- und während des Sintervorgangs des Verfahrens das Ferrit mit mindestens einem der anderen Elemente der Komponente oder mit einem Vorläufer des Elements mit einem Co-Sinter-Verfahren gebunden wird.

22. Verfahren nach Anspruch 21, **dadurch gekennzeichnet, dass** mindestens eines der anderen Elemente ein Ferritmaterial gemäß der folgenden chemischen Formel ist:
YₐTR_{b}Bi_{b'}Fe_{c}Al_{d}InₑCa_{f}Cu_{g}ZrₕVᵢCoⱼSiₖO_{12±γ}
wobei TR eine seltene Erde oder eine Kombination von seltenen Erden ist, wobei TR das Element Y nicht enthält, und:
-1 ≤ γ ≤ 1;
3 (a+b+b'+c+d+e) + 2 (f+g+j) + 4 (h+k) + 5i = 24±2γ
1 ≤ a ≤ 3,5;
0 ≤ b ≤ 1,5;
0 < b' ≤ 1;
4 ≤ c ≤ 5;
0 ≤ d ≤ 1,5;
0 ≤ e ≤ 0,8;
0 ≤ f ≤ 1;
0 < g < 0,05;
0 ≤ i ≤ 0,8;
0 ≤ j ≤ 0,5;
0 ≤ k ≤ 0,5,
wobei b + d ≤ 1 ist.

23. Verfahren nach Anspruch 21, **dadurch gekennzeichnet, dass** mindestens eines der anderen Elemente ein Ferritmaterial gemäß der folgenden chemischen Formel ist:
YₐTR_{b}Bi_{b'}Fe_{c}Al_{d}InₑCa_{f}Cu_{g}ZrₕVᵢCoⱼSiₖO_{12±γ}
wobei TR eine seltene Erde oder eine Kombination von seltenen Erden ist, wobei TR das Element Y nicht umfasst, und:
-1 ≤ γ ≤ 1;
3 (a+b+b'+c+d+e) + 2 (f+g+j) + 4 (h+k) + 5i = 24±2γ
1 ≤ a ≤ 3,5;
0 ≤ b ≤ 1,5;
0 < b' ≤ 1;
4 ≤ c ≤ 5;
0 ≤ d ≤ 1,5;
0 ≤ e ≤ 0,8;
0 ≤ f ≤ 1;
0 < g < 0,05;
0 ≤ h ≤ 1;
0 ≤ i ≤ 0,8;
0 ≤ j ≤ 0,5;
0 ≤ k ≤ 0,5,
wobei b + d ≤ 1 ist.

24. Verfahren nach Anspruch 22 oder 23, **dadurch gekennzeichnet, dass** mindestens eines der anderen Elemente eine Metallschicht ist.

## Claims

1. A garnet structure ferrite material with very low saturation magnetisation, **characterised in that** it conforms to the following chemical formula:
YₐTR_{b}Bi_{b'}Fe_{c}Al_{d}InₑCa_{f}Cu_{g}ZrₕVᵢCoⱼSiₖO_{12±γ}
with TR being a rare earth or a combination of rare earths, TR not comprising the element Y and:
-1 ≤ *γ* ≤ 1;
3 (a+b+b'+c+d+e) + 2 (f+g+j) + 4 (h+k) + 5i = 24±2*γ*;
1 ≤ a ≤ 3.5;
0 ≤ b ≤ 1.5;
0 < b' ≤ 1;
4 ≤ c ≤ 5;
0 ≤ d ≤ 1.5;
0 ≤ e ≤ 0.8;
0 ≤ f ≤ 1;
0 < g < 0.05;
0 ≤ i ≤ 0.8;
0 ≤ j ≤ 0.5;
0 ≤ k ≤ 0.5;
with b + d ≥ 1.2.

2. The garnet structure ferrite material with very low saturation magnetisation according to claim 1, **characterised in that** it conforms to the following chemical formula:
YₐTR_{b}Bi_{b'}Fe_{c}Al_{d}InₑCa_{f}Cu_{g}ZrₕVᵢCoⱼSiₖO_{12±γ}
with TR being a rare earth or a combination of rare earths, TR not comprising the element Y and:
-1 ≤ *γ* ≤ 1;
3 (a+b+b'+c+d+e) + 2 (f+g+j) + 4 (h+k) + 5i = 24±2*γ*;
1 ≤ a ≤ 3.5;
0 ≤ b ≤ 1.5;
0 < b' ≤ 1;
4 ≤ c ≤ 5;
0 ≤ d ≤ 1.5;
0 ≤ e ≤ 0.8;
0 ≤ f ≤ 1;
0 < g < 0.05;
0 ≤ h ≤ 1;
0 ≤ i ≤ 0.8;
0 ≤ j ≤ 0.5;
0 ≤ k ≤ 0.5;
with b + d ≥ 1.2.

3. The garnet structure ferrite material according to claim 1 or 2, wherein d ≤ 1.

4. The garnet structure ferrite material according to claims 1 to 3, wherein b ≤ 0.8.

5. The garnet structure ferrite material according to claims 1 to 4, wherein i is non-zero.

6. The garnet structure ferrite material according to claims 1 to 5, the one or more rare earths being Gd or Dy or Tb.

7. A component, **characterised in that** it has a ferrite material according to any one of claims 1 to 6, and at least one garnet structure ferrite material conforming to the following chemical formula:
YₐTR_{b}Bi_{b'}Fe_{c}Al_{d}InₑCa_{f}Cu_{g}ZrₕVᵢCoⱼSiₖO_{12±γ}
with TR being a rare earth or a combination of rare earths, TR not comprising the element Y and:
-1 ≤ *γ* ≤ 1;
3 (a+b+b'+c+d+e) + 2 (f+g+j) + 4 (h+k) + 5i = 24±2*γ*;
1 ≤ a ≤ 3.5;
0 ≤ b ≤ 1.5;
0 < b' ≤ 1;
4 ≤ c ≤ 5;
0 ≤ d ≤ 1.5;
0 ≤ e ≤ 0.8;
0 ≤ f ≤ 1;
0 < g < 0.05;
0 ≤ i ≤ 0.8;
0 ≤ j ≤ 0.5;
0 ≤ k ≤ 0.5;
with b + d ≤ 1.

8. A component, **characterised in that** it has a ferrite material according to claims 1 to 6, and at least one garnet structure ferrite material conforming to the following chemical formula:
YₐTR_{b}Bi_{b'}Fe_{c}Al_{d}InₑCa_{f}Cu_{g}ZrₕVᵢCoⱼSiₖO_{12±γ}
with TR being a rare earth or a combination of rare earths, TR not comprising the element Y and:
-1 ≤ *γ* ≤ 1;
3 (a+b+b'+c+d+e) + 2 (f+g+j) + 4 (h+k) + 5i = 24±2*γ*;
1 ≤ a ≤ 3.5;
0 ≤ b ≤ 1.5;
0 < b' ≤ 1;
4 ≤ c ≤ 5;
0 ≤ d ≤ 1.5;
0 ≤ e ≤ 0.8;
0 ≤ f ≤ 1;
0 < g < 0.05;
0 ≤ h ≤ 1;
0 ≤ i ≤ 0.8;
0 ≤ j ≤ 0.5;
0 ≤ k ≤ 0.5;
with b + d ≤ 1.

9. The component according to one of claim 7 or 8, further comprising at least one metal type material.

10. A component having a magnetic core made of a garnet structure ferrite material with low magnetisation conforming to the following formula:
YₐTR_{b}Bi_{b'}Fe_{c}Al_{d}InₑCa_{f}Cu_{g}ZrₕVᵢCoⱼSiₖO_{12±γ}
with TR being a rare earth or a combination of rare earths, TR not comprising the element Y and:
-1 ≤ *γ* ≤ 1;
3 (a+b+b'+c+d+e) + 2 (f+g+j) + 4 (h+k) + 5i = 24±2*γ*;
1 ≤ a ≤ 3.5;
0 ≤ b ≤ 1.5;
0 < b' ≤ 1;
4 ≤ c ≤ 5;
0 ≤ d ≤ 1.5;
0 ≤ e ≤ 0.8;
0 ≤ f ≤ 1;
0 < g < 0.05;
0 ≤ i ≤ 0.8;
0 ≤ j ≤ 0.5;
0 ≤ k ≤ 0.5;
with b + d ≤ 1,
and a ferrite material with very low saturation magnetisation according to claims 1 to 6.

11. A component having a magnetic core made of a garnet structure ferrite material with low magnetisation conforming to the following formula:
YₐTR_{b}Bi_{b'}Fe_{c}Al_{d}InₑCa_{f}Cu_{g}ZrₕVᵢCoⱼSiₖO_{12±γ}
with TR being a rare earth or a combination of rare earths, TR not comprising the element Y and:
-1 ≤ *γ* ≤ 1;
3 (a+b+b'+c+d+e) + 2 (f+g+j) + 4 (h+k) + 5i = 24±2*γ*;
1 ≤ a ≤ 3.5;
0 ≤ b ≤ 1.5;
0 < b' ≤ 1;
4 ≤ c ≤ 5;
0 ≤ d ≤ 1.5;
0 ≤ e ≤ 0.8;
0 ≤ f ≤ 1;
0 < g < 0.05;
0 ≤ h ≤ 1;
0 ≤ i ≤ 0.8;
0 ≤ j ≤ 0.5;
0 ≤ k ≤ 0.5;
with b + d ≤ 1, and a ferrite material with very low saturation magnetisation according to claims 1 to 6.

12. The component according to claims 7 to 11, **characterised in that** said component has multiple layers of ferrite material with very low saturation magnetisation and multiple layers of magnetic ferrite material.

13. The component according to claims 7 to 12, **characterised in that** it is a microwave frequency circulator or isolator or phase-shifter.

14. The component according to claims 7 to 13, operating within a frequency range of approximately 0.5 GigaHertz to approximately 20 GigaHertz.

15. A method for manufacturing a ferrite material according to claims 1 to 6, **characterised in that** it comprises the following steps:
- weighing raw materials of the oxide or carbonate type in order to obtain the composition of the ferrite material;
- mixing and first crushing of the raw materials;
- firing at a temperature ranging between approximately 800 and 900°C;
- second crushing of the obtained powder, followed by pressing;
- sintering said re-crushed powder at a temperature ranging between approximately 800 and 1,000°C.

16. The manufacturing method according to claim 15, **characterised in that** it further comprises, after the firing operation, adding vanadium oxide as a sintering aid.

17. The manufacturing method according to claim 16, **characterised in that** the material obtained after the firing operation conforms to the following chemical formula:
Y_{2.28-b}Cu_{0.05}Gd_{b}Bi_{0.67}Fe_{5-d}Al_{d}O₁₂
with 0 ≤ d ≤ 1 and 0 ≤ b ≤ 0.8, the sintering aid being vanadium oxide.

18. The manufacturing method according to claims 15 to 17, **characterised in that** the first and the second crushing operations are carried out in a humid environment.

19. The manufacturing method according to claims 15 to 18, **characterised in that** the sintering of the re-crushed powder is carried out in air or in oxygen.

20. The manufacturing method according to any one of claims 15 to 19, **characterised in that** the crushing operations are carried out with a ball mill and/or by attrition.

21. The method for manufacturing a component having a plurality of elements, including a ferrite material according to any one of claims 1 to 6 with very low saturation magnetisation, **characterised in that**:
- said ferrite is prepared using the method according to claims 15 to 20;
- and during the sintering operation of said method, said ferrite is joined to at least one of said other elements of said component or to a precursor of said element using a co-sintering method.

22. The method according to claim 21, **characterised in that** at least one of the other elements is a ferrite material conforming to the following chemical formula:
YₐTR_{b}Bi_{b'}Fe_{c}Al_{d}InₑCa_{f}Cu_{g}ZrₕVᵢCoⱼSiₖO_{12±γ}
with TR being a rare earth or a combination of rare earths, TR not comprising the element Y and:
-1 ≤ *γ* ≤ 1;
3 (a+b+b'+c+d+e) + 2 (f+g+j) + 4 (h+k) + 5i = 24±2*γ*;
1 ≤ a ≤ 3.5;
0 ≤ b ≤ 1.5;
0 < b' ≤ 1;
4 ≤ c ≤ 5;
0 ≤ d ≤ 1.5;
0 ≤ e ≤ 0.8;
0 ≤ f ≤ 1;
0 < g < 0.05;
0 ≤ i ≤ 0.8;
0 ≤ j ≤ 0.5;
0 ≤ k ≤ 0.5;
with b + d ≤ 1.

23. The method according to claim 21, **characterised in that** at least one of the other elements is a ferrite material conforming to the following chemical formula:
YₐTR_{b}Bi_{b'}Fe_{c}Al_{d}InₑCa_{f}Cu_{g}ZrₕVᵢCoⱼSiₖO_{12±γ}
with TR being a rare earth or a combination of rare earths, TR not comprising the element Y and:
-1 ≤ *γ* ≤ 1;
3 (a+b+b'+c+d+e) + 2 (f+g+j) + 4 (h+k) + 5i = 24±2*γ*;
1 ≤ a ≤ 3.5;
0 ≤ b ≤ 1.5;
0 < b' ≤ 1;
4 ≤ c ≤ 5;
0 ≤ d ≤ 1.5;
0 ≤ e ≤ 0.8;
0 ≤ f ≤ 1;
0 < g < 0.05;
0 ≤ h ≤ 1;
0 ≤ i ≤ 0.8;
0 ≤ j ≤ 0.5;
0 ≤ k ≤ 0.5;
with b + d ≤ 1.

24. The method according to claim 22 or 23, **characterised in that** at least one of the other elements is a metal layer.
